Europäisches Patentamt

European Patent Office

Office européen des brevets

(11) Publication number: 0 394 523 A1

(12) EUROPEAN PATENT APPLICATION

(21) Application number: 89107589.7

(51) Int. Cl.5: B23B 5/44, B24B 19/08

(22) Date of filing: 26.04.89

(43) Date of publication of application:
31.10.90 Bulletin 90/44

(84) Designated Contracting States:
AT BE CH DE ES FR GB GR IT LI LU NL SE

(71) Applicant: Jarecsni, Zoltan
Lenin körut 87
H-1067 Budapest(HU)

Applicant: Kokovay, Gyula
Gararin u. 50
H-3058 Leninvaros(HU)

Applicant: Vékonyné Jarecsny, Klara
Branyiszko u. 6/B
H-3519 Miskolc(HU)

Applicant: Vékony, Sandor
Branyiszko u. 6/B
H-3519 Miskolc(HU)

(72) Inventor: Jarecsni, Zoltan
Lenin körut 87
H-1067 Budapest(HU)
Inventor: Kokovay, Gyula
Gararin u. 50
H-3058 Leninvaros(HU)
Inventor: Vékonyné Jarecsny, Klara
Branyiszko u. 6/B
H-3519 Miskolc(HU)
Inventor: Vékony, Sandor
Branyiszko u. 6/B
H-3519 Miskolc(HU)

(74) Representative: Füchsle, Klaus, Dipl.-Ing. et al
Hoffmann . Eitle & Partner Patentanwälte
Arabellastrasse 4
D-8000 München 81(DE)

(54) Method and device for producing mantle surfaces having closed or broken shapes.

(57) A method for producing mantle surfaces having closed or broken shapes, wherein at least two rotational motions are used. According the improvement in this invention, a working tool and a workpiece to be machined are moved in respect to each other with a translatory motion and the workpiece is rotated around its own axis in the course of forming the mantle surface.

A device for working machines producing workpieces with mantle surfaces having closed or broken shapes, wherein the device is arranged on a revolver head or on an auxiliary support of the working machine and it has a tool gripper and a workpiece gripper. Thre device is provided according to this invention with a first driving unit (7) translatoryly moving a working tool (12) and a workpiece (1) in respect to each other and a second driving unit (9) rotationally driving the workpiece (1), and the driving units (7, 9) are electrically connected to each other.

## METHOD AND DEVICE FOR PRODUCING MANTLE SURFACES HAVING CLOSED OR BROKEN SHAPES

The invention relates to a method for producing mantle surfaces having closed or broken shapes, wherein at least two rotational motions are used. The invention also relates to a device for working machines producing workpieces with mantle surfaces having closed or broken shapes, wherein the device is arranged on a revolver head or on an auxiliary support of the working machine and it has a tool gripper and a workpiece gripper.

A number of methods and devices have recently been developed for providing noncircular profile to an object as described in e. g. HU-PS 156 607 and HU-PS 167 643. In the solution of the first publication, the workpiece is moved, and the main spindle of the universal turret-lathe borne in an eccentric sleeve is rotated by a mechanical driving system in harmony with the rotation of the eccentric sleeve. Thus, the harmonic polygon profiles are formed by the double rotation of the workpiece and by the relatively stationary tool system.

In both of the mentioned solutions, an unbalanced mass varying in the course of the planet motions of the main spindle system of the lathe and of the workpiece is to be moved. In addition, the mechanical driving unit using a number of gears is quite complicated, noisy and it has a reduced efficiency and accuracy which results from the accumulating clearances which are necessary between the elements of such drives.

It has previously been suggested for lessening the shortcomings of the known methods and apparatuses to use instead of the mechanical driving system an electric one. Nevertheless, this method and apparatus remained somewhat complex and their operation is relatively inaccurate. Further to this, the energy consumption of the controlled electric drive of the unbalanced masses is quite high.

The utilization of the previous solution is considerably delimited by the fact, that articles only with straight lined generatrix can be machined with them. When altering the eccentricity determining the shape of the side surfaces of the profiled articles, the positions of the polygon profiles will be changed in relation to each other, thus, the accurate positioning of these profiles is not possible with the known solutions. Additionally, the relation of the unbalanced masses will also be changed by altering the eccentricity and this considerably decreases the efficiency of the machining.

When a grinding wheel is used as a working tool, the shaping of the side surfaces of a ground profile will change between the middle of the surface and its peak depending upon the changing diameter of the grinding wheel, thus, the ground bore and nut inserted in the bore will not have identical shapes. In case of axial auxiliary movements of free kinematics, a helical profile can not be machined.

An important deficiency of the known solutions is in that for moving the cutter tools, a complex mechanical system with double spindle and considerable weight can only be used. It has further been proved in the practice, that the rigidity and the accuracy of the produced shapes of the known machining systems are not sufficient.

The devices of the state of the art for producing polygon profiles have the common problem of being special machines which can only be used for this purpose and not as universal working machines. Vica versa, the conventional universal lathes can not be provided with auxiliary devices or adapters for adapting them to machine polygon profiles.

It is therefore the main object of this invention to provide a method and a device for producing mantle surfaces having closed or broken shapes, which are relatively simple and effective, comprise fewer steps of realization and, at the same time, which result in a higher accuracy and quality of the machined polygon profiles. Another object of the invention is to provide an arrangement which can be used as an auxiliary device with conventional working machines for making them adapted to machine polygon profiles.

According to the improvement of the method in this invention, a working tool and a workpiece to be machined are moved with respect to each other with a translatory motion and the workpiece is rotated around its own axis in the course of forming the mantle surface.

In a preferred embodiment in this invention, the translatory motion between the workpiece and the working tool is produced from a rotational motion, and the rotational motion producing the translatory motion and the the rotational motion of the workpiece are electrically harmonized. In sense of the invention, it is also possible to use both rotational motions for moving the workpiece, wherein the working tool is stationaryly fixed, and the workpiece is rotated around a first axis concentrically to the rotational axis of the workpiece and this first axis is rotated around a second axis being eccentrical to the first axis, and the rotations of the first and second axes are electrically harmonized.

According to the invention, it also a preferred embodiment, wherein the motional energies of constructional parts being driven with motions other than rotational are counterbalanced.

In a preferred embodiment, in case of modifying the shape of the mantle surface of the workpiece, a position of a working point of the working tool in respect to a position of the workpiece is held constant.

It is also a preferred embodiment, wherein a mantle surface of helical shape is produced by modifying a zero point of a harmonizing system of the rotational motions.

According to the improvement of the device in this invention, it is provided with a first driving unit translatoryly moving a working tool and a workpiece in respect to each other and a second driving unit rotationally driving the workpiece, and the driving units are electrically connected to each other.

In a preferred embodiment of the device in this invention, the second driving unit is attached to the workpiece gripper being connected to an eccentric sleeve housing an eccentric spindle, and the tool gripper is rotatably connected to the eccentric spindle and is fixed to a housing of the device without rotation.

In still another preferred embodiment, the workpiece gripper is rotatably arranged on an eccentric spindle being rotatably borne within an eccentric sleeve, and the first driving unit is attached to the eccentric sleeve and the second driving unit to the eccentric spindle.

In sense of the invention, it is preferable, when the eccentric spindle and the eccentric sleeve are connected to each other by an arrangement keeping a stable zero point of an electric connection between the driving units, and the arrangement is attached to the eccentric sleeve as well as to the eccentric spindle.

For the electric connection between the driving units, it is a preferred embodiment, wherein electric signalizers being electrically connected to each other are attached to the driving units. With this, a quite simple embodiment is provided, wherein the arrangement keeping the stable zero point of the electric connection has an inner toothed wheel connected to the electric signalizer and being rotatable within the eccentric sleeve, and a gear affixed to the eccentric spindle is attached to the inner-toothed wheel.

In a preferred embodiment in this invention, a means for counterbalancing the motional energies of the tool gripper and the workpiece gripper is provided, which can have counterweights fastened on the eccentric spindle and the eccentric sleeve.

In still a preferred embodiment, the workpiece gripper has a motion modifier comprising a floating member having four perpendicular and prismatic guiding surfaces and being connected to prisms, and the floating member is rotatably connected by slide members to the eccentric spindle and two opposite prisms are fastened to the housing of the device, two other opposite prisms are fastened to the tool gripper.

It is also a preferred embodiment, wherein the workpiece gripper has a motion modifier comprising a floating member having four perpendicular and prismatic guiding surfaces and being connected by slide members to prisms, and the floating member is rotatably connected to the eccentric spindle and two opposite prisms are fastened to the first driving unit, two other opposite prisms are fastened to the workpiece gripper. In this case, a means for altering the zero point of the electric connection dependant upon a feed of the working machine can be provided.

For altering the zero point of the electric connection, it is preferable, when a housing of the electric signalizer is rotatably borne and is connected to a moving table of the working machine.

In a preferred embodiment, a cable rope fixed with its one end to a stationary bed of the working machine and with its other end to the moving table is wound on a rubber cylinder fast on the housing of the electric signalizer. In this case, the distance between the end of the cable rope fixed to the bed and the rubber cylinder can be alterable.

In still a preferred embodiment, a portion of the cable rope between the rubber cylinder and the bed is guided by a pulley which is rotatably arranged on one end of a two-armed lever, an other end of which is formed as a feeler being in connection with an eccentric disk running with the eccentric spindle. In this case, the position of a turning point of the two-armed lever can be alterable for varying a relation between the arms of the two-armed lever.

In a preferred embodiment in this invention, finally, an axis of the working tool is perpendicular to an axis of the workpiece for avoiding distortions of the shape of the workpiece.

Further objects and details of this invention will be described hereinafter with reference to the accompanying drawings on the basis of exemplified embodiments. In the drawings,

Fig. 1 is a top view of a preferred embodiment of the device in this invention,

Fig. 2 is the same view for another preferred embodiment,

Fig. 3 shows a common portion of the embodiments in Figs. 1 and 2: the side elevational view of the motion modifyer,

Fig. 4 is a section taken on line IV-IV in Fig. 3,

Fig. 5 shows a portion of the embodiment in Fig. 1: the side elevational view of the arrangement keeping the zero point of the electric connection,

Fig. 6 is a fragmentary view of a preferred embodiment,

Fig. 7 illustrates the profile distortion of ground profiles, and

Fig. 8 is a schematic illustration of grinding a profile according to this invention.

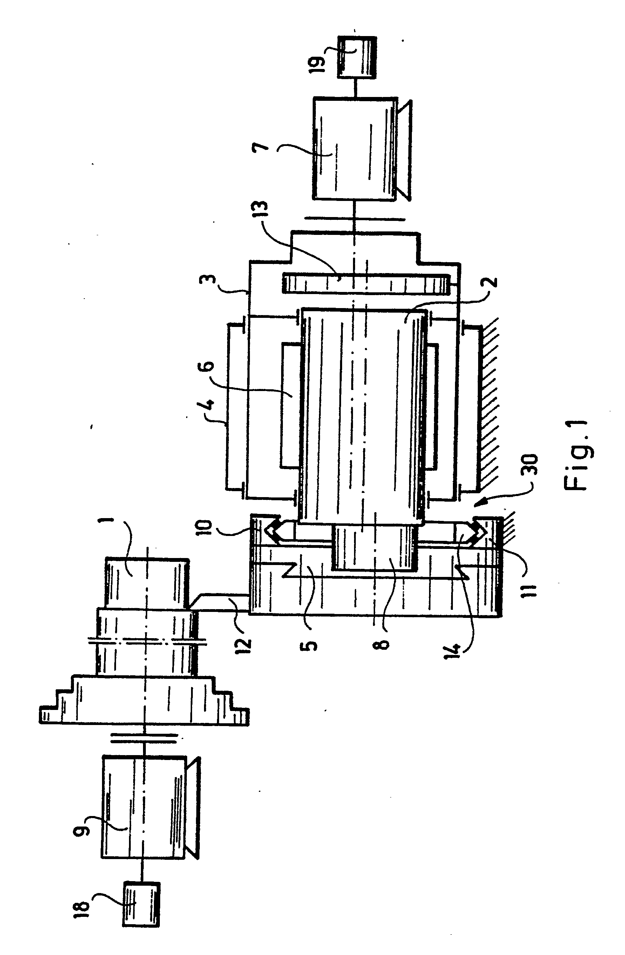

In Fig. 1, the device in this invention is shown in an example for machining on a conventional lathe, wherein a workpiece 1 is rotationally driven by an electric driving unit 9. To rotational driving unit 9, an electric signalizer 18 is connected. The movement of a working tool 12 of the device is obtained also from a rotational motion of a rotational driving unit 7. To this latter device, an electric signalizer 19 is also connected.

In sense of the invention, working tool 12 and workpiece 1 are translatoryly moved in respect to each other. For this, driving unit 7 is connected to an eccentric sleeve 3 which is rotatably arranged within a housing 4 of the device. As it is apparent from the drawing, the inner bore of eccentric sleeve 3 is eccentric in relation to the rotational axis of eccentric sleeve 3. In this eccentric bore, an eccentric spindle 2 is rotatably borne and it has an eccentric pin 8 on its outer end. Eccentric pin 8 has the same eccentricity in relation to eccentric spindle 2 as the bore of eccentric spindle 2 to its rotational axis. The rotation is transferred from eccentric sleeve 3 by an arrangement 13 which, among others, provides the constant position of eccentric sleeve 3 and eccentric spindle 2 in respect to each other, as it will be understood later.

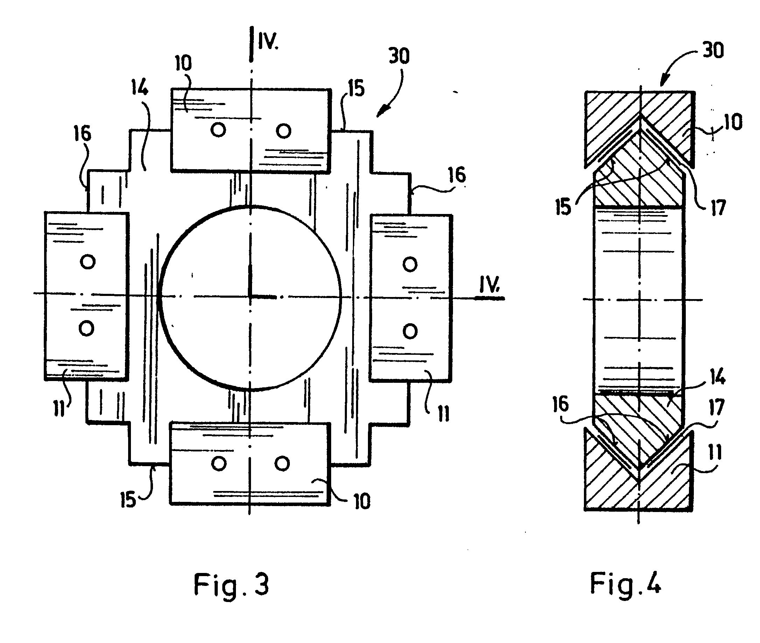

Eccentric pin 8 of eccentric spindle 2 is rotatably arranged in a workpiece gripper 20 of workpiece 1. To workpiece grip per 20, a motion modifier 30 is attached which is also connected to housing 4 of the device. The operation of motion modifier 30 will be described in more detail in connection with Figs. 3 and 4.

In sense of the invention, workpiece 1 as well as working tool 12 should be moved in respect to each other in a harmonized manner. This is solved by interconnecting electric signalizer 18 of driving unit 9 with electric signalizer 19 of driving unit 7 and, in this way, harmonizing the rotational movements produced by driving units 7 and 9.

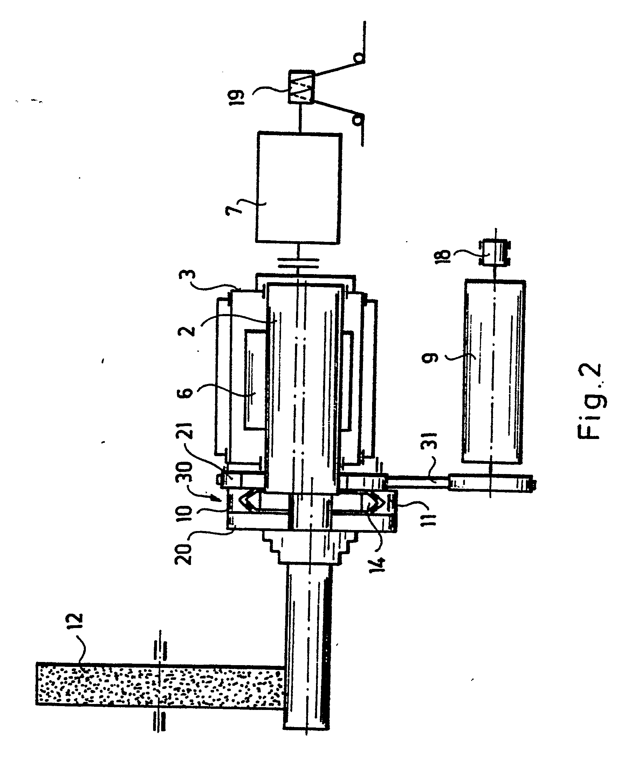

In Fig. 2, a preferred embodiment for machining the polygon profiles by grinding is shown. Therein, working tool 12, i. e. the grinding wheel is in relatively stable position, it is only driven by a high speed rotational motion. All of the motions being necessary for shaping the polygon profile are given onto workpiece gripper 20 of workpiece 1. Driving unit 7 having electric signalizer 19 connected to it is also in this example attached to eccentric sleeve 3 and the rotation is transmitted by arrangement 13 to eccentric spindle 2 being rotatable relative to eccentric sleeve 3. The other rotation produced by driving unit 9 having electric signalizer 18 is transmitted by a belt 31 to belt pulley 21 being rotatable in respect to housing 4. Motion modifier 30 is connected to belt pulley 21 and, on the other side, to workpiece gripper 20.

According to the invention, the motional energies resulting from the unbalanced masses of tool gripper 5 and workpiece gripper 20 should be counterbalanced. This is solved by providing a counterbalancing means 6 which is connected in both embodiments shown in Figs. 1 and 2 to eccentric spindle 2 as well as to eccentric sleeve 3.

In Figs. 3 and 4, a preferred embodiment of motion modifier 30 is shown. Motion modifier 30 has a floating member 14, along the perpendicular edges of which four prismatic guiding surfaces 15 and 16 are provided. This feature is clearly shown in Fig. 4 illustrating a section on a broken line IV-IV in Fig. 3. Each of opposite guiding surfaces 15 is attached by slide members 17 to prisms 10, the inner guiding surfaces of which are formed for containing guiding surfaces 15. Opposite guiding surfaces 16 being perpendicular to guiding surfaces 15 are also connected by slide members 17 to prisms 11.

Motion modifier 30 is shown in Figs. 1 and 2 in the same sectional view as in Fig. 4. In this way, it will be apparent that in Fig. 1, opposite prisms 11 attached to guiding surfaces 16 of floating member 14 are connected to housing 4 of the device, whilst perpendicularly arranged prisms 10 attached to guiding surfaces 15 are connected to tool gripper 5. In Fig. 2, accordingly: prisms 11 are connected to belt pulley 21, prisms 10 to workpiece gripper 20.

This preferred embodiment of motion modifier 30 allows a two-directional displacement along guiding surfaces 15 and 16, but the two displacements are derived from different motions. In a preferred embodiment in Fig. 1, the first displacement is determined by prisms 11 being fixed to housing 4 and the second displacement by prisms 10 being fixed to tool gripper 5. In the same way, in Fig. 2, the first displacement is given by prisms 11 fastened on belt pulley 21, the second one by prisms 10 fastened on workpiece gripper 20. As is shown in Fig. 3, the first and second displacements are perpendicular to each other, their combination, however, allows a motion in a plane. As guiding surfaces 15 and 16 have prismatic forms, motion modifier 30 has a considerable rigidity against motions out of this plane. This is of eminent importance with respect to the accuracy of the machining.

As it is clear from what has been said above, a tip of working tool 12 will move in operation of the embodiment in Fig. 1 on a circle path, the radius of which is two times greater than the resulting eccentricity of eccentric spindle 2 and eccentric sleeve 3. This resulting eccentricity will be defined by the relative position of eccentric spindle 2 and eccentric sleeve 3 which is to be previously set and which will remain constant during the machining. This means that eccentric spindle 2 and eccentric sleeve 3 once set will not move in respect to each other during the operation. Nevertheless, the shape of the profile to be machined is determined just by this resulting eccentricity. When the profile is now to be changed, eccentric spindle 2 is to be displaced relatively to eccentric sleeve 3. Since the profile can not be broken or non-continuous, a stable zero point for the control must be provided. Arrangement 13 serves for this purpose.

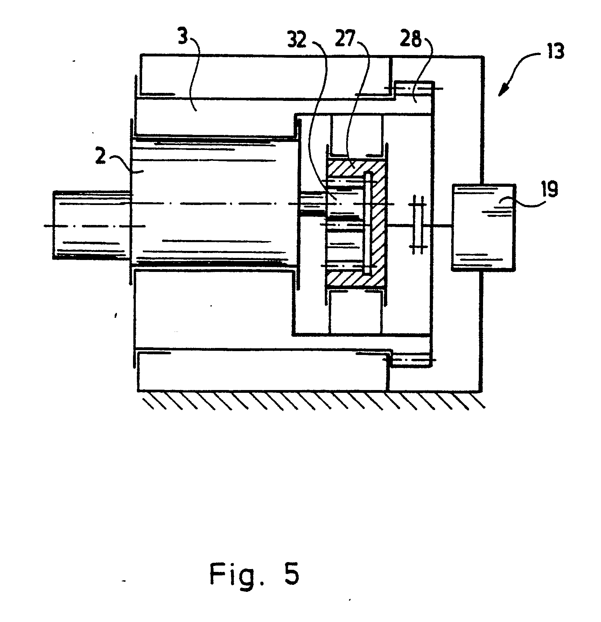

In Fig. 5, a preferred embodiment of arrangement 13 holding the stable zero point of the electric interconnection is shown. Therein, eccentric sleeve 3 and eccentric spindle 2 being rotatable in eccentric sleeve 3 are also shown. Eccentric sleeve 3 has a toothing 28, through which it is driven by driving unit 7 (Fig. 1). In eccentric sleeve 3, an inner-toothed wheel 27 is rotatably arranged which is in connection with electric signalizer 19 of driving unit 7. On eccentric spindle 2, a gear 32 is fastened without rotation, the toothing of which is connected to that of inner-toothed wheel 27.

Arrangement 13 operates as follows. The relative rotational displacement of eccentric spindle 2 and eccentric sleeve 3 will be reduced to its half by cooperating gear 32 and inner-toothed wheel 27, followingly, the axis of electric signalizer 19 will be twisted by this half value, but in a direction which is opposite to (the remaining half of) the rotational displacement. These counter-moves will neutralize each other, thus, the zero point remains in its original position. And the constant position of the zero point of electric signalizer 19 is a sine qua non for using the device in this invention with NC working machines.

It has also been mentioned above, that means 6 is used for counterbalancing the motional energies of tool gripper 5 and workpiece gripper 20. Essentially, counterbalances are used therein, the measurements and positions of which can be determined by calculation during the production of the device. For this, an equilibrium of the centrifugal forces resulting from the unbalanced masses and of the counter-forces giving the counterbalance is to be provided as usual.

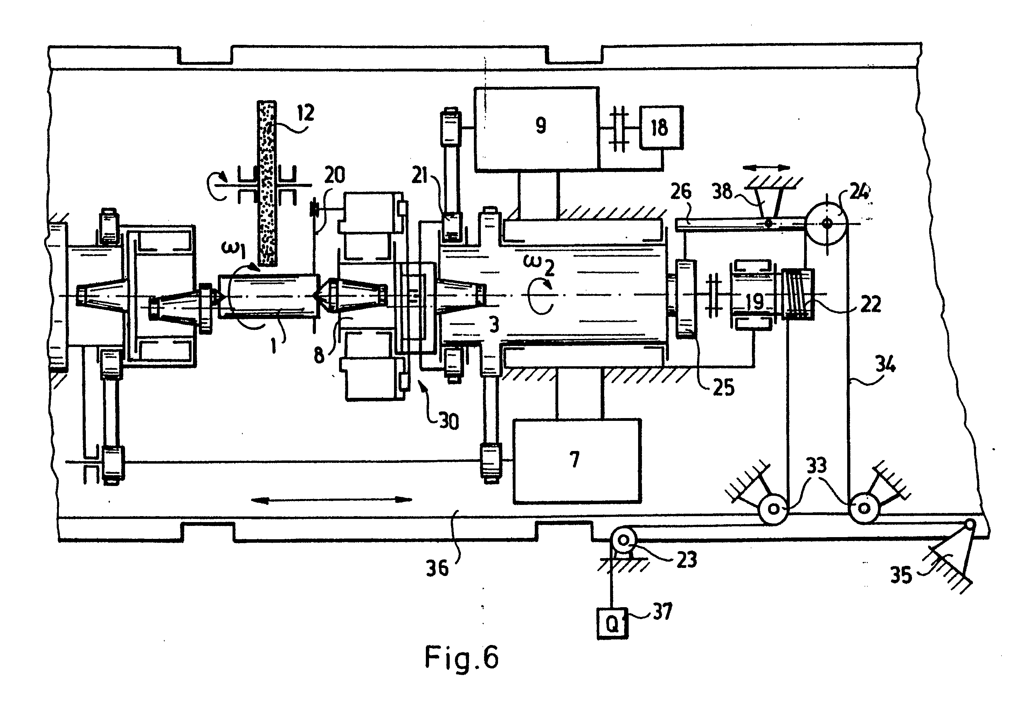

In Fig. 6, a preferred embodiment is shown for machining profiles by grinding which operates according to the principle as described in connection with Fig. 2. Thus, both rotations are given onto workpiece gripper 20, namely from driving unit 7 onto eccentric sleeve 3, and from driving unit 9 through belt pulley 21 onto motion modifier 30.

The embodiment as shown in Fig. 6 is adapted for machining mantle surfaces of not only straight lined but also helical generatrix. For this, however, the electric interconnection of the two rotations must continuously be changed which is solved in this embodiment by twisting the housing of electric signalizer 19 depending upon the feed motion. On the housing of electric signalizer 19, a rubber cylinder 22 is fastened, onto which a cable rope 34 is wound. One end of cable rope 34 is fastened on a stationary bed 35 of the working machine, another end of it on a moving table 36 of the working machine. The latter device is provided in this embodiment by guiding cable rope 34 by pulleys 33 rotatably arranged on moving table 36 and by applying on this end of cable rope 34 guided by a pulley 23 rotatably arranged on bed 35 a weight load 37 for the constant tension of cable rope 34.

In operation, the embodiment as shown in Fig. 6 differs from what has been said above in that the housing of electric signalizer 19 twists in relation to the movement of moving table 36 being displaced in dependency of the feed motion used for machining the profile. The measurements of the helical shape of the surface will now be determined by this displacement. In this embodiment, these measurements can be influenced by varying the diameter of rubber cylinder 22.

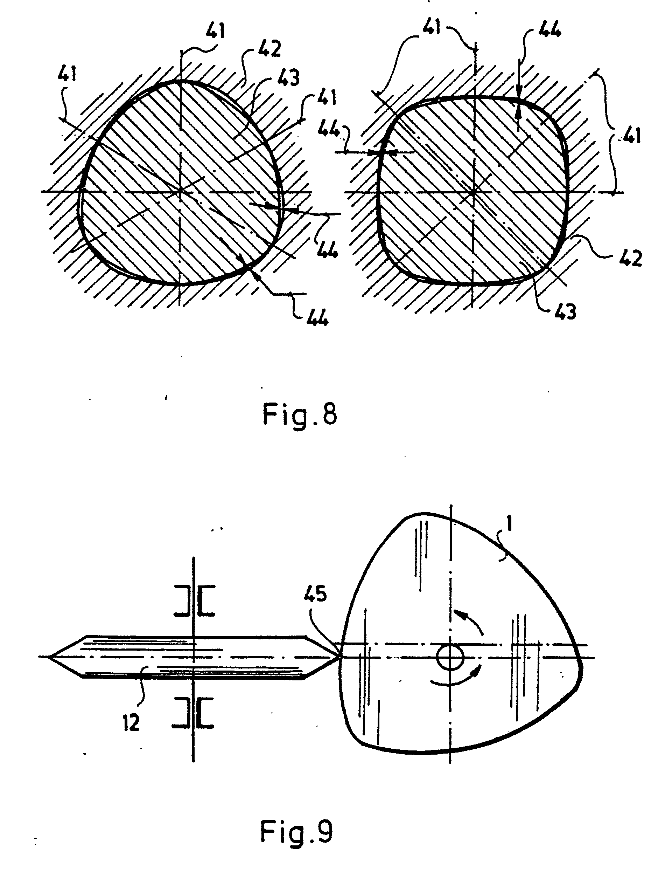

When a grinding wheel is used as working tool 12, the distortion of the profile resulting from the changes in the diameter of the grinding wheel should be eliminated. If this would not be done, a bore 42 and a nut 43 pushed together would have the profile differences as shown in Fig. 8. At the intersections of symmetry axes 41 and the profiles, bore 42 and nut 43 touch each other at points and between these points, gaps 44 remain between the profiles. When grinding wheels with conventional measurements are used, these gaps 44 will be not smaller than some tenths of a millimeter. This accuracy of the profiles, however, is insufficient in some applications.

The dependency of the profile from the diameter of the grinding wheel can also be eliminated with the help of the preferred embodiment as shown in Fig. 6. Therein, the principal consideration is utilized that the change of the working point resulting from the change of the diameter of the grinding wheel can be switched out by periodical changes of the electric connection between the drives. Therefore, in this preferred embodiment, the casing of electric signalizer 19 is "swung". For this purpose, a two-armed lever 26 is used, on one end of which a pulley 24 guiding cable rope 34 is rotatably arranged and on the other end of which a feeler is applied. The feeler is guided by an eccentric disk 25 rotating together with eccentric spindle 2. Eccentric disk 25 is formed according to the diameter of the grinding wheel. But this diameter can be taken into consideration by changing the relation of the lengths of arms of two-armed lever 26 to each other. For this, the position of a turning point 38 of two-armed lever 26 should conveniently be made variable.

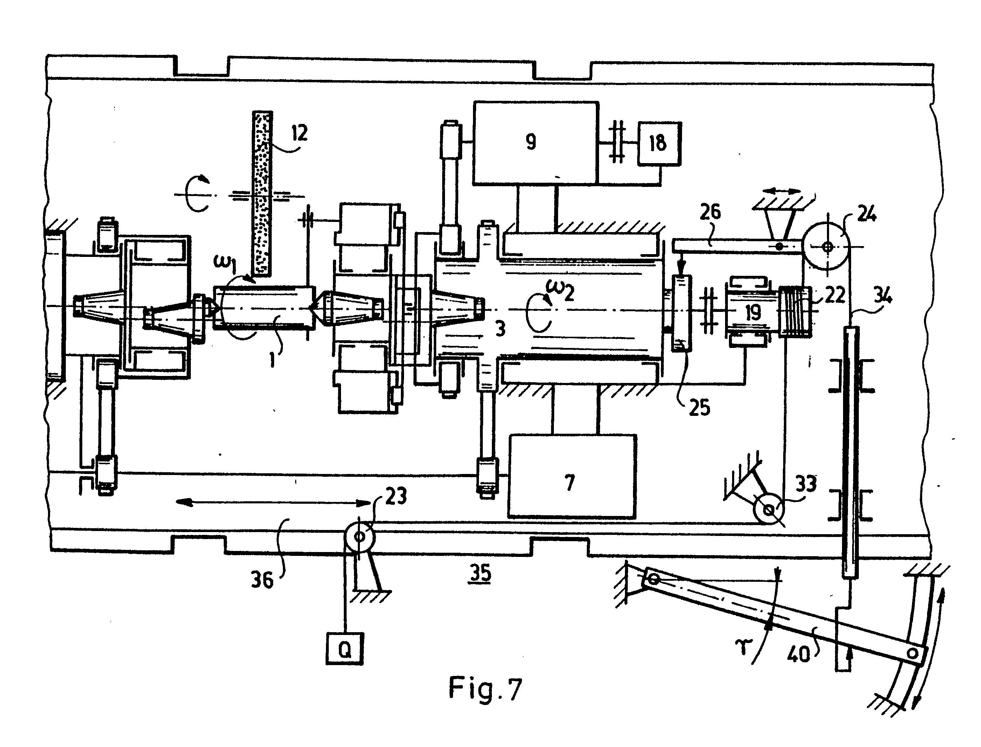

Further adjustment is made possible in a preferred embodiment as shown in Fig. 7. This differs from the previous one in that the position of the end of cable rope 34 attached to stationary bed 35 can also be adjusted. For this, a guiding bar 40 is used, the inclination of which and, with this, the position of the end of cable rope 34 in respect to bed 35 are variable. These changes as well as the changes of the diameter of rubber cylinder 22 result in modifications of the spirality of the helical form to be machined.

The dependency upon the diameter of the grinding wheel will not emerge if a working point 45 of working tool 12 is always in the same place in the space. This is illustrated in Fig. 9, wherein working tool 12 is a grinding wheel, the axis of which is perpendicular to the axis of workpiece 1, working point 45 of working tool 12 remains stationary in the space, thus, it forms a profile being identical with a working tool having one cutting edge.

The device in this invention as described hereinabove is an auxiliary equipment or adapter which can be mounted on conventional lathes for enabling them to machine polygon profiles. Thus, e. g., the adapter can be arranged on the rear cutter holder of a universal turret-lathe. If it is mounted in another case onto the revolver disk of a lathe center, it can be switched on. In still another case, the adapter of this invention can be used on universal mantle grinders, and the polygon profiles can be machined in the same gripping as the rotation surface. Finally, it can also be arranged on the auxiliary bed.

## Claims

1. A method for producing mantle surfaces having closed or broken shapes, wherein at least two rotational motions are used, characterized in that a working tool and a workpiece to be machined are moved in respect to each other with a translatory motion and the workpiece is rotated around its own axis in the course of forming the mantle surface.

2. A method as claimed in Claim 1, wherein the translatory motion between the workpiece and the working tool is produced from a rotational motion, and the rotational motion producing the translatory motion and the rotational motion of the workpiece are electrically harmonized.

3. A method as claimed in Claim 1 or 2, wherein both rotational motions are used for moving the workpiece, and the working tool is stationaryly fixed, wherein the workpiece is rotated around a first axis concentrically to the rotational axis of the workpiece and this first axis is rotated around a second axis being eccentrical to the first axis, and the rotations of the first and second axes are electrically harmonized.

4. A method as claimed in Claim 2 or 3, wherein motional energies of constructional parts being driven with motions other than rotational are counterbalanced.

5. A method as claimed in any one of Claims 1 to 4, wherein in case of modifying the shape of the mantle surface of the workpiece, a position of a working point of the working tool in respect to a position of the workpiece is held constantly.

6. A method as claimed in any one of Claims 1 to 5, wherein a mantle surface of helical shape is produced by modifying a zero point of a harmonizing system of the rotational motions.

7. A device for working machines producing workpieces with mantle surfaces having closed or broken shapes, wherein the device is arranged on a revolver head or on an auxiliary support of the working machine and it has a tool gripper and a workpiece gripper, characterized in that it is provided with a first driving unit (7) translatoryly moving a working tool (12) and a workpiece (1) in respect to each other and a second driving unit (9) rotationally driving the workpiece (1), and the driving units (7, 9) are electrically connected to each other.

8. A device as claimed in Claim 7, wherein the second driving unit (9) is attached to the workpiece gripper (20) connected to an eccentric sleeve (3) housing an eccentric spindle (2), and the tool gripper (5) is rotatably connected to the eccentric spindle (2) and is fixed to a housing (4) of the device without rotation.

9. A device as claimed in Claim 7, wherein the workpiece gripper (20) is rotatably arranged on an eccentric spindle (2) being rotatably borne within an eccentric sleeve (3), and the first driving unit (7) is attached to the eccentric sleeve (3) and the second driving unit (9) to the eccentric spindle (2).

10. A device as claimed in Claim 8 or 9, wherein the eccentric spindle (2) and the eccentric sleeve (3) are connected .to each other by an arrangement (13) keeping a stable zero point of an electric connection between the driving units (7, 9), and the arrangement (13) is attached to the eccentric sleeve (3) as well as to the eccentric spindle (2).

11. A device as claimed in any one of Claims 7 to 10, wherein electric signalizers (18, 19) being electrically connected to each other are attached to the driving units (7, 9).

12. A device as claimed in Claim 10 or 11, wherein the arrangement (13) keeping the stable zero point of the electric connection has an inner-toothed wheel (27) connected to the electric signalizer (18, 19) and being rotatable within the eccentric sleeve (3), and a gear (32) affixed to the eccentric spindle (2) is attached to the inner-toothed wheel (27).

13. A device as claimed in any one of Claims 7 to 12, wherein a means (6) for counterbalancing the motional energies of the tool gripper (5) and the workpiece gripper (20) is provided.

14. A device as claimed in Claim 13, wherein the means (6) for counterbalancing has counterweights fast on the eccentric spindle (2) and the eccentric sleeve (3).

15. A device as claimed in any one of Claims 7 to 14, wherein the workpiece gripper (20) has a motion modifier (30) comprising a floating member (14) having four perpendicular and prismatic guiding surfaces (15, 16) and being connected to prisms (10, 11), and the floating member (14) is rotatably connected by slide members (17) to the eccentric spindle (2) and two opposite prisms (10) are fast to the housing (4) of the device, two other opposite prisms (11) are fast to the tool gripper (5).

16. A device as claimed in any one of Claims 7 to 14, wherein the workpiece gripper (20) has a motion modifier (30) comprising a floating member (14) having four perpendicular and prismatic guiding surfaces (15, 16) and being connected by slide members (17) to prisms (10, 11), and the floating member (14) is rotatably connected to the eccentric spindle (2) and two opposite prisms (10) are fast to the first driving unit (7), two other opposite prisms (11) are fast to the workpiece gripper (20).

17. A device as claimed in any one of Claims 7 to 16, wherein an arrangement (13) for altering the zero point of the electric connection in dependency of a feed of the working machine is provided.

18. A device as claimed in Claim 17, wherein for altering the zero point of the electric connection, a housing of the electric signalizer (18, 19) is rotatably borne and is connected to a moving table (36) of the working machine.

19. A device as claimed in Claim 18, wherein a cable rope (34) fixed with its one end to a stationary bed (35) of the working machine and with its other end to the moving table (36) is wound on a rubber cylinder (22) fast on the housing of the electric signalizer (18, 19).

20. A device as claimed in Claim 19, wherein a distance between the end of the cable rope (34) fixed to the bed (35) and the rubber cylinder (22) is alterable.

21. A device as claimed in Claim 19 or 20, wherein a portion of the cable rope (34) between the rubber cylinder (22) and the bed (35) is guided by a pulley (24) which is rotatably arranged on one end of a two-armed lever (26), an other end of which is formed as feeler being in connection with an eccentric disk (25) running with the eccentric spindle (2).

22. A device as claimed in Claim 21, wherein a position of a turning point (38) of the two-armed lever (26) is alterable for varying a relation between the arms of the two-armed lever (26).

23. A device as claimed in any one of Claims 7 to 22, wherein an axis of the working tool (12) is perpendicular to an axis of the workpiece (1) for avoiding distortions of the shape of the workpiece (1).

Fig.1

EP 0 394 523 A1

Fig.2

EP 0 394 523 A1

Fig.4

Fig. 3

Fig. 5

Fig.6

EP 0 394 523 A1

Fig. 7

EP 0 394 523 A1

Fig.8

Fig.9

European Patent Office

**EUROPEAN SEARCH REPORT**

Application Number

EP 89 10 7589

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AT-B- 167 747 (J. POSIWAL)<br>* page 1, line 77 - page 3, line 36; figures 1-3 *<br>--- | 1-3,7-10,15,16,23 | B 23 B 5/44<br>B 24 B 19/08 |
| X | DE-A-1 752 236 (MEYRAT & LUISONI)<br>* claims 1-4; figures 1-3 *<br>--- | 1-3,5-10,15,16,23 | |
| X<br><br>A | DE-C- 5 077 (METHLOW)<br>* the whole document *<br><br>--- | 1-3,5,15,23<br>7,8 | |
| X,D<br><br><br><br>A | DE-A-1 752 285 (LICENCIA TALAMANYOKAT ERTEKESITO)<br>* claims 1-4; page 4, line 4 - page 9, line 5; figures 13,14 *<br><br>--- | 1-3,5,6,23<br><br><br>7,8,10,17 | |
| X | DE-C- 829 411 (MANUFACTURE DE MACHINES DU HAUT-THIN)<br>* page 2, line 89 - page 3, line 59; figures 1-11 *<br>----- | 1,2,4-23 | TECHNICAL FIELDS SEARCHED (Int. Cl.5)<br><br>B 23 B<br>B 24 B<br>B 23 Q |

The present search report has been drawn up for all claims

| Place of search | Date of completion of the search | Examiner |
|---|---|---|
| BERLIN | 08-12-1989 | CUNY J M J C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)